# EUROPÄISCHE PATENTSCHRIFT

(11) **EP 2 539 476 B1**
(45) Veröffentlichungstag und Bekanntmachung des Hinweises auf die Patenterteilung: **16.04.2014**
(21) Anmeldenummer: 11707375.9
(22) Anmeldetag: 23.02.2011
(51) Int. Cl.: C23C 10/00, C23C 10/06, C23C 10/18, C23C 10/48

(54) **VERFAHREN ZUR EINSTELLUNG DES KÜHLMITTELVERBRAUCHS INNERHALB AKTIV GEKÜHLTER BAUTEILE**
PROCESS FOR THE ADJUSTMENT OF COOLANT CONSUMPTION INSIDE AN ACTIVELY COOLED COMPONENT
PROCÉDÉ POUR LE RÉGLAGE DE LA CONSOMMATION D'UN LIQUIDE DE REFROIDISSEMENT DANS UN ÉLÉMENT REFROIDI

(30) Priorität: 23.02.2010 EP 10001849
(43) Veröffentlichungstag der Anmeldung: 02.01.2013
(73) Patentinhaber: Siemens Aktiengesellschaft, 80333 München (DE)
(72) Erfinder: AHMAD, Fathi, 41564 Kaarst (DE); HALBERSTADT, Knut, 45481 Mülheim an der Ruhr (DE); LERNER, Christian, 46282 Dorsten (DE)
(86) Internationale Anmeldenummer: PCT/EP2011/052684
(87) Internationale Veröffentlichungsnummer: WO 2011/104276

(56) Entgegenhaltungen:
- EP-A1- 0 984 074
- EP-A1- 1 288 330
- EP-A1- 1 672 089
- EP-A1- 1 889 943
- DE-A1-102005 030 925
- DE-C1- 3 827 141

## Beschreibung

Die Erfindung betrifft Verfahren zur Einstellung des Kühlmittelverbrauchs innerhalb aktiv gekühlter Bauteile und Bauteil.

Bauteile, die bei hohen Temperaturen eingesetzt werden, wie z.B. Turbinenschaufeln in Gasturbinen, weisen eine aktive Kühlung auf, bei der in das Innere ein Kühlmittel eingeführt wird und durch Kühlmittelkanäle durch die Turbinenschaufel verläuft und ggf. aus Filmkühllöchern austritt.
Dabei ist es wichtig, dass die Turbinenschaufel nicht zu stark gekühlt wird, weil sich dadurch der Kühlmittelverbrauch stark erhöht, was den Wirkungsgrad der Turbine reduzieren würde, weil die Kühlluft meistens dem Kompressor entnommen wird.
Daher ist es wichtig, den Kühlmittelverbrauch durch optimale Einstellung der Durchflussrate einzustellen. EP 1 889 943 offenbart ein Verfahren zur Einstellung des Durchflusses innerhalb eines hohlen Bauteils.
Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1, 2 und 3: schematische Darstellungen der Erfindung,
- Figur 4: eine Turbinenschaufel
- Figur 5: eine Gasturbine

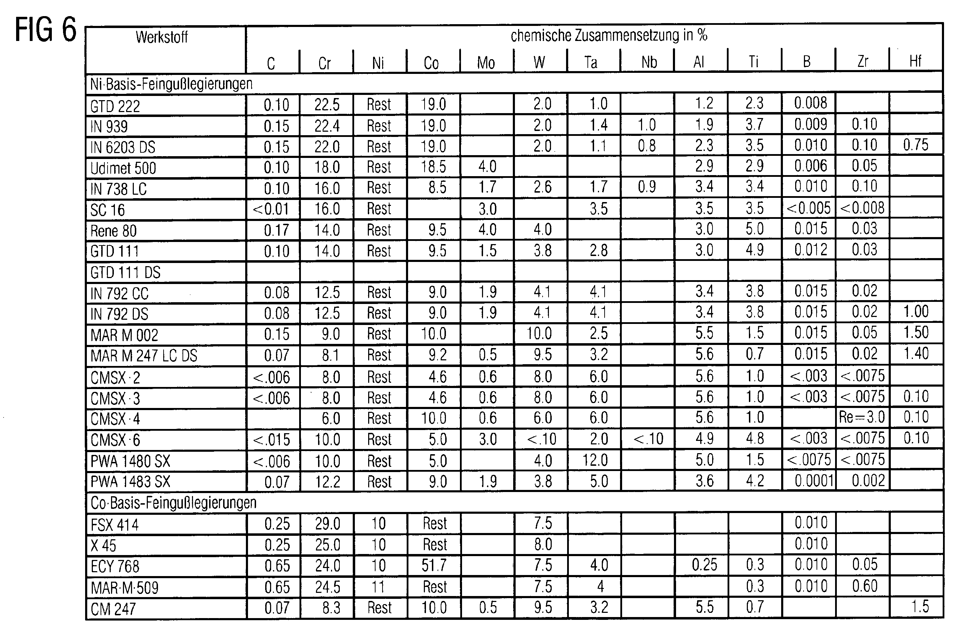

- Figur 6: eine Liste von Superlegierungen.

Die Figuren und die Beschreibung stellen nur Ausführungsbeispiele der Erfindung dar.

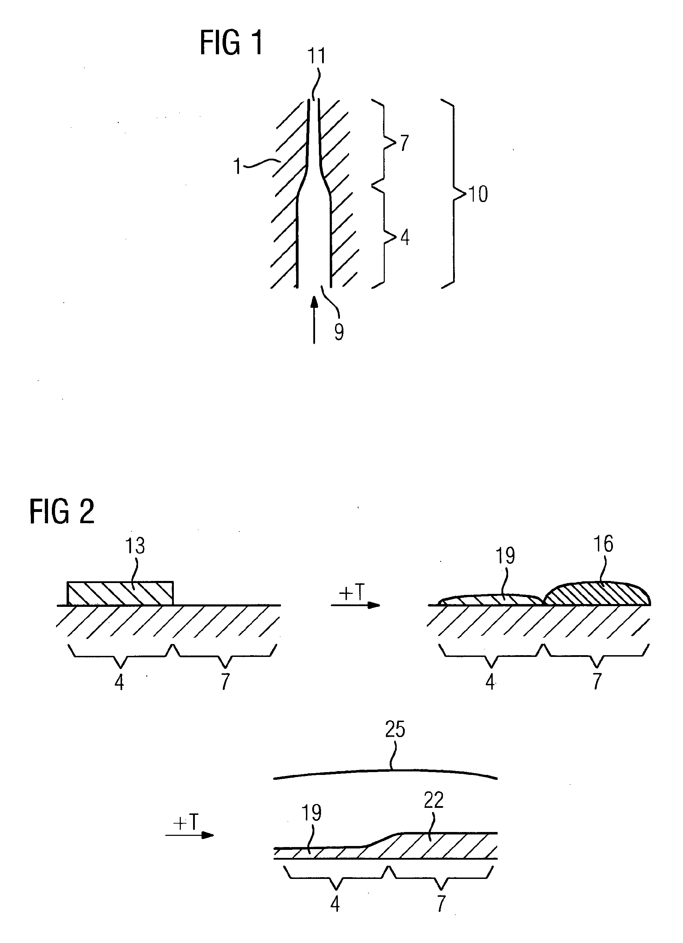

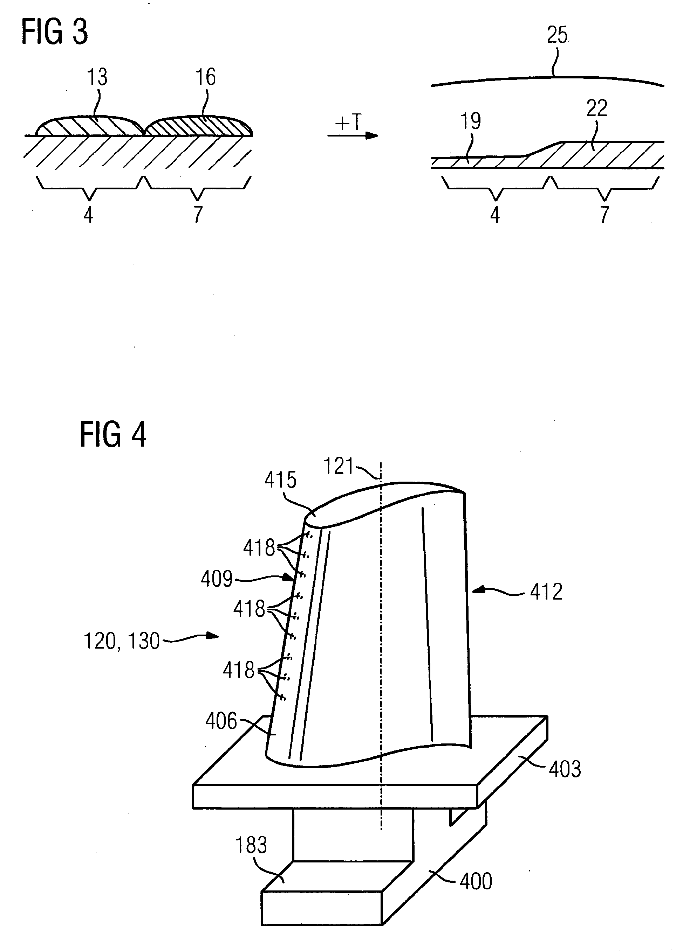

In Figur 1 ist schematisch zumindest ein Teil eines inneren Kanals 10 des Bauteils 1 dargestellt.
Der Kanal 10 ist insbesondere ein Kühlkanal 10 und kann in verschiedene Bereiche, hier vorzugsweise in zwei Bereiche 4 und 7 unterteilt sein, die am Anfang am Eintritt 9 einen größeren Querschnitt aufweisen als am Austritt 11. Dementsprechend gibt es Bereiche 4, 7 mit unterschiedlichen Strömungsquerschnitten.
Die Bereiche 4, 7 müssen nicht am Eintritt 9 oder am Austritt 11 liegen.
Der Eintritt 9 befindet sich bei einer Turbinenschaufel im Bereich des Fußes 400 (Fig. 4) und der Austritt 11 im Bereich der Abströmkante 412 (Fig. 4).
Das Bauteil 1, 120, 130 kann mehrere Kühlkanäle aufweisen.

Die Erfindung schlägt vor, die verschiedenen Bereiche 4, 7 mit Diffusionsbeschichtungen zu versehen, die zur Verdickung und damit zu einer Verengung des Durchgangs des Kühlkanals 10 an verschiedenen Bereichen 4, 7 führen.
Daher wird durch einen ersten Diffusionsbeschichtungsprozess mittels eines Materials 13 nur im ersten Bereich 4 eine Diffusionsbeschichtung 19 erzeugt, die zur Wandverdickung führt (Figur 2).
In einem zweiten Schritt wird Material 16 nur in dem zweiten Bereich 7 aufgebracht, um ebenfalls eine Diffusionsbeschichtung in dem Bereich 7 zu erzeugen, der zu einer zweiten Diffusionsbeschichtung 22 führt, die jedoch, insbesondere wegen eines anderen Beschichtungsprozesses, zu einer größeren Verdickung führt als im Bereich 4.
Das Material 16 kann dem Material 13 des ersten Beschichtungsprozesses entsprechen oder verschieden sein.
Die Diffusionsbeschichtungen 19 und 22 bilden vorzugsweise eine durchgehende Diffusionsbeschichtung 25.

Vorzugsweise ist dies für die Bereiche 4, 7 ein Aluminisierungsprozess, der für den Bereich 4 NiAl für den Diffusionsbeschichtungsprozess verwendet und/oder für den Bereich 7 in Ni₂Al₃ zur Diffusionsbeschichtung verwendet wird.

Die beiden Beschichtungsprozesse können auch gleichzeitig angewandt werden, wie es in Figur 3 dargestellt ist.

Vorzugsweise wird der gesamte innere Bereich der Turbinenschaufel 120, 130 beschichtet.

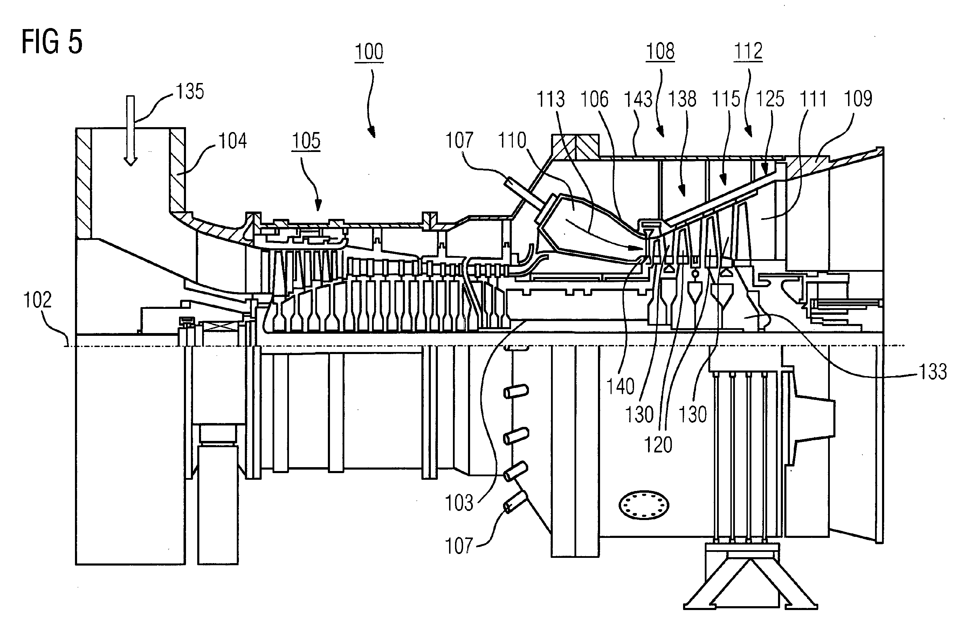

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Einstellung des Mitteldurchflusses innerhalb eines hohlen Bauteils (1, 120, 130),
das im Innern zumindest einen Kanal (10) mit verschiedenen Bereichen (4, 7) aufweist,
die (4, 7) verschiedene Strömungsquerschnitte aufweisen, wobei in dem Bereich (4) mit dem größeren Strömungsquerschnitt durch einen ersten Diffusionsbeschichtungsprozess eine geringere Wanddickenverstärkung eingestellt wird und in dem Bereich (7) mit dem kleineren Strömungsquerschnitt eine größere Wandverdickung,
durch einen zweiten,
verschiedenen Diffusionsbeschichtungsprozess eingestellt wird,
bei dem für den ersten Diffusionsbeschichtungrsprozess NiAl (13) als Aluminiumquelle verwendet wird,
bei dem Ni₂Al₃ (16) als Aluminiumquelle für den zweiten Diffusionsbeschichtungsprozess verwendet wird,

2. Verfahren nach Anspruch 1,
bei dem für die Diffusionsprozesse Aluminisierungsprozesse verwendet werden.

3. Verfahren nach Anspruch 1 oder 2,
bei dem die Verschiedenen Diffusionsprozesse nacheinander durchgeführt werden.

4. Verfahren nach Anspruch 1 oder 2,
bei dem die verschiedenen Diffusionsprozesse gleichzeitig durchgeführt werden.

## Claims

1. Process for setting the average flow rate within a hollow component (1, 120, 130),
which, in the interior, has at least one duct (10) with various regions (4, 7),
which (4, 7) have various flow cross sections,
wherein a relatively small wall thickness increase is set in the region (4) with the relatively large flow cross section by a first diffusion coating process, and a relatively large wall thickening is set,
by a second, different diffusion coating process, in the region (7) with the relatively small flow cross section, wherein NiAl (13) is used as the aluminum source for the first diffusion coating process,
wherein Ni₂Al₃ (16) is used as the aluminum source for the second diffusion coating process.

2. Process according to Claim 1,
wherein aluminization processes are used for the diffusion processes.

3. Process according to Claim 1 or 2,
wherein the various diffusion processes are carried out in succession.

4. Process according to Claim 1 or 2,
wherein the various diffusion processes are carried out at the same time.

## Revendications

1. Procédé de réglage du débit moyen à l'intérieur d'un élément (1 , 120 , 130) constitutif creux,
qui a à l'intérieur au moins un canal (10) ayant des zones (4 , 7) différentes,
dans lequel, dans la zone (4) ayant la section d'écoulement la plus grande, on règle par une première opération de revêtement par diffusion un renfort d'épaisseur de paroi plus petit et, dans la zone (7) ayant la section d'écoulement la plus petite, un épaississement de parois plus grand,
on règle par une deuxième
opération de revêtement par diffusion différente,
dans lequel pour la première opération de revêtement par diffusion on utilise NiAl (13) comme source d'aluminium,
dans lequel on utilise Ni₂Al₃ (16) comme source d'aluminium pour la deuxième opération de revêtement par diffusion.

2. Procédé selon la revendication 1, dans lequel on utilise des aluminisations comme opérations de diffusion.

3. Procédé selon la revendication 1 ou 2, dans lequel on effectue les opérations de diffusion différentes l'une après l'autre.

4. Procédé selon la revendication 1 ou 2, dans lequel on effectue les opérations de diffusion différentes en même temps.
